# EUROPÄISCHE PATENTSCHRIFT

(11) **EP 2 890 965 B1**
(45) Veröffentlichungstag und Bekanntmachung des Hinweises auf die Patenterteilung: **28.02.2018**
(21) Anmeldenummer: 13756080.1
(22) Anmeldetag: 26.08.2013
(51) Int. Cl.: B65B 3/17, B65B 3/26, B65D 33/00, G01N 1/38

(54) **BEUTEL ZUR DURCHFÜHRUNG VON VERDÜNNUNGSREIHEN, AUFNAHMEVORRICHTUNG, DISPENSER, VERFAHREN ZUR DURCHFÜHRUNG VON VERDÜNNUNGSREIHEN, VERWENDUNG VON BEUTELN ZUR DURCHFÜHRUNG VON VERDÜNNUNGSREIHEN UND VERDÜNNUNGSREIHENSYSTEM**
BAG FOR CARRYING OUT DILUTION SERIES, RECEIVING DEVICE, DISPENSER, METHOD FOR CARRYING OUT DILUTION SERIES, USE OF BAGS FOR CARRYING OUT DILUTION SERIES, AND DILUTION SERIES SYSTEM
SAC POUR LA MISE EN OEUVRE DE DILUTIONS EN SÉRIE, DISPOSITIF RÉCEPTEUR, DISTRIBUTEUR, PROCÉDÉ POUR LA MISE EN OEUVRE DE DILUTIONS EN SÉRIE, UTILISATION DE SACS POUR LA MISE EN OEUVRE DE DILUTIONS EN SÉRIE ET SYSTÈME DE DILUTION EN SÉRIE.

(30) Priorität: 29.08.2012 EP 12182109
(43) Veröffentlichungstag der Anmeldung: 08.07.2015
(73) Patentinhaber: Inlabtec AG, 9000 St. Gallen (CH)
(72) Erfinder: FREYDL, Ernst, 9011 St. Gallen (CH)
(74) Vertreter: Hepp Wenger Ryffel AG
(86) Internationale Anmeldenummer: PCT/EP2013/067604
(87) Internationale Veröffentlichungsnummer: WO 2014/033079

(56) Entgegenhaltungen:
- EP-A1- 0 096 191
- US-A- 5 664 399
- BALENTINE C W ET AL: "The pre- and post-grinding application of rosemary and its effects on lipid oxidation and color during storage of ground beef", MEAT SCIENCE, ELSEVIER SCIENCE, GB, Bd. 73, Nr. 3, 1. Juli 2006 (2006-07-01), Seiten 413-421, XP027989815, ISSN: 0309-1740 [gefunden am 2006-07-01]
- "Inlabtec Serial Diluter - Bedienungsanleitung", , 28. September 2013 (2013-09-28), XP055089468, Gefunden im Internet: URL:http://www.inlabtec.com/img/pool/2013_ 09_28_Inlabtec_Serial_Diluter_BA_D.pdf [gefunden am 2013-11-21]

## Beschreibung

Die Erfindung betrifft einen Beutel zur Durchführung von Verdünnungsreihen, eine Aufnahmevorrichtung zur Aufnahme von Beuteln zur Durchführung von Verdünnungsreihen, die Verwendung von Beuteln zur Durchführung von Verdünnungsreihen, einen Dispenser, ein Verdünnungsreihensystem sowie ein Verfahren zum Durchführen von Verdünnungsreihen mit den Merkmalen des Oberbegriffs der unabhängigen Patentansprüche.

Eine Verdünnungsreihe ist eine Mehrzahl von Lösungen, die für einen Zweck aus einer konzentrierten Ausgangslösung durch Verdünnen hergestellt wurde. Derartige Verdünnungsreihen werden beispielsweise in der Mikrobiologie zum Zählen von Bakterien hergestellt. Um ein Zählen der Bakterien zu ermöglichen, dürfen weder zu viele noch zu wenige Bakterien kultiviert werden. Durch Herstellen einer Verdünnungsreihe lässt sich die ursprüngliche Konzentration von Bakterien aus dem verdünnten Medium zurück rechnen.

Für das Herstellen von Proben für Verdünnungsreihen für die Bestimmung von Mikroorganismen in Fleischproben können beispielsweise Stomacher-Beutel verwendet werden (Balentine et al., Meat Science 73 (2006), 413.).

Aus US 5 664 399 ist eine Vorrichtung zum Abfüllen von Tiersamen für die künstliche Befruchtung bekannt. Die Vorrichtung weist Beutel auf, die auf einem kippbaren Tisch angeordnet sind. Die Beutel verfügen über einen Füllkanal. Über diesen Füllkanal kann Flüssigkeit eingefüllt werden.

EP 0 096 191 beschreibt einen Beutel für Infusionslösungen mit zwei Einfüllöffnungen. Die Beutel werden aus einem Schlauch aus thermoplastischen Kunststoff hergestellt. Die Einfüllöffnungen werden durch einen Schnitt an der Kante des Schlauchs freigelegt.

Es sind aus dem Stand der Technik weiterhin Dilutersysteme bekannt, die die Probe mit in das Dilutersystem einsaugen und das Volumen der Verdünnungsflüssigkeit über eine Volumenbestimmung an einer Vakuumpumpe bestimmen (siehe BioDiluter von Jul). Derartige Systeme sind sehr aufwändig zu reinigen und damit sehr teuer.

Um eine genaue Bestimmung der Bakterienanzahl zu ermöglichen, ist ein sauberes Arbeiten notwendig und sämtliche Teile, die in Berührung mit dem Medium, das die Bakterien enthält, kommen, müssen steril sein. Dies hat einen grossen Reinigungsaufwand zur Folge. Wichtig ist des Weiteren ein homogenes Mischen der Probe mit dem Verdünnungsmittel.
Es ist daher Aufgabe der Erfindung, die Nachteile des Standes der Technik zu vermeiden und insbesondere ein Hilfsmittel zur Durchführung von Verdünnungsreihen, die Verwendung des Hilfsmittels zur Durchführung von Verdünnungsreihen, eine Aufnahmevorrichtung zur Aufnahme von Hilfsmitteln zur Durchführung von Verdünnungsreihen, einen Dispenser zum Abgeben von Verdünnungsflüssigkeit, ein System zur Durchführung von Verdünnungsreihen sowie ein Verfahren zum Durchführen von Verdünnungsreihen zu schaffen, die eine schnelle und unkomplizierte Herstellung von Verdünnungsreihen erlauben, und den Reinigungsaufwand und damit die auftretenden Kosten zu verringern.

Die Aufgabe wird gelöst durch einen Beutel zur Durchführung von Verdünnungsreihen, der Verwendung eines Beutels zur Durchführung von Verdünnungsreihen, eine Aufnahmevorrichtung zur Aufnahme von Beuteln zur Durchführung von Verdünnungsreihen, einen Dispenser zum Abgeben von Verdünnungsflüssigkeit, einem System zur Durchführung von Verdünnungsreihen sowie einem Verfahren zur Durchführung von Verdünnungsreihen gemäss den unabhängigen Ansprüchen.

Zur Lösung der oben angegebenen Aufgabe führt ein Beutel zur Durchführung von Verdünnungsreihen, der mindestens einen Aufnahmebereich zum Hinzufügen von Probe und/oder Verdünnungsflüssigkeit und zur Entnahme von verdünntem Medium aufweist. Des weiteren weist der Beutel mindestens einen Mischbereich zum Sammeln und Vermischen von Probe- und Verdünnungsflüssigkeit auf, wobei der mindestens eine Mischbereich an drei Seiten flüssigkeitsdicht verschlossen ist und der Aufnahmebereich den Mischbereich an einer Seite begrenzt.

Die drei flüssigkeitsdicht verschlossenen Seiten entsprechen erfindungsgemäss der Mindestanzahl von Seiten, die verschlossen sein müssen, um eine Flüssigkeit in einem Beutel zu halten. Es wäre selbstverständlich denkbar, durch beispielsweise Hinzufügen von weiteren Seiten, mehr flüssigkeitsdicht verschlossene Seiten vorzusehen.

Ein derartiger Beutel kann jeweils eine Flüssigkeitscharge, die bevorzugt Probe und Verdünnungsflüssigkeit umfasst, zur Herstellung einer Verdünnungsreihe aufnehmen, ist steril und muss nicht gereinigt werden. Dies verringert den Reinigungsaufwand.

Der Beutel kann nicht selbsttragend ausgestaltet sein.

Nicht selbsttragend im Rahmen der Anmeldung bedeutet, dass der Beutel von sich aus nicht standfähig ist.

Dies verringert den Platzbedarf während der Aufbewahrung.

Der Beutel kann zwei Folien umfassen.

Ein Beutel aus zwei Folien ist leicht herstellbar und benötigt wenig Platz zur Aufbewahrung.

Der Beutel kann entlang der drei Seiten verbunden sein, insbesondere verschweisst sein.

Durch eine Verbindung an drei Seiten lässt sich ein Beutel aus Folien leicht herstellen. Eine Verschweissung ist insbesondere bei Kunststofffolien eine kostengünstige und schnelle Art, die drei Seiten zu verbinden.

Der Aufnahmebereich kann mindestens eine, bevorzugt zwei Laschen aufweisen, welche umfaltbar sind.

Eine Lasche erleichtert das Öffnen des Beutels und ermöglicht einen Zugang zum Mischbereich.

Die mindestens eine Lasche kann entlang der ganzen Länge des Aufnahmebereichs ausgebildet sein.

Somit lässt sich ein zuverlässiger Zugang zum Mischbereich entlang der ganzen Länge des Aufnahmebereichs erzielen. Es wäre weiterhin möglich, jeweils eine Lasche in der Mitte des Aufnahmebereichs auszubilden, sodass durch die mittlere Anordnung ebenfalls die gesamte Länge als Zugang zum Mischbereich geöffnet werden kann. Weiterhin können einzelne Laschen für jeden Pipettenspitzenzugang zu dem Mischbereich ausgebildet sein. Ein Pipettenspitzenzugang im Rahmen der Erfindung ist eine Öffnung eines Beutels in die eine Pipettenspitze eingeführt werden kann. In jeden Fall müssen die Laschen so ausgebildet sein, dass sie einen Zugang zum Mischbereich ermöglichen.

Die Verbindung, bevorzugt eine Verschweissung, an den Seiten des Mischbereichs umfasst bevorzugt die Seiten des Aufnahmebereichs nicht. Somit lässt sich der Aufnahmebereich frei öffnen und bewegen.

Der Aufnahmebereich kann zwei Pipettenspitzenzugänge umfassen, die durch eine Verbindung, bevorzugt eine Punktschweissung, voneinander getrennt sind. Somit lässt sich der jeweilige Pipettenspitzenzugang unabhängig von dem anderen öffnen und der jeweils nicht verwendete Pipettenspitzenzugang bleibt geschlossen. Somit wird die hygienische Handhabung erleichtert.

Der Beutel kann eine Mehrzahl, bevorzugt fünf, inbesondere bevorzugt sechs, Aufnahmebereiche und/oder Mischbereiche umfassen. Somit ist der Beutel auf die Art der Verdünnungsreihe anpassbar und erlaubt die Durchführung einer Verdünnungsreihe in einem Beutel.

Ein erster Aufnahmebereich, bevorzugt alle benachbarten Aufnahmebereiche, können von einem zweiten Aufnahmebereich bzw. voneinander abtrennbar ausgebildet sein. Die Abtrennbarkeit kann bevorzugt durch eine Perforation ausgestaltet sein. Somit lässt sich ein Beutel einfach und schnell für eine bestimmte Verdünnungsreihe vorbereiten, in dem die bevorzugte Anzahl an Aufnahmebereichen abgetrennt werden kann.

Der Aufnahmebereich kann so ausgestaltet sein, dass keine toten Ecken ausgebildet sind und die Durchmischung durch Wirbelbildung gefördert wird. Bevorzugt weist der Aufnahmebereich abgeschrägte Ränder, insbesondere Schweissnähte, auf oder der Aufnahmebereich weist halbkreisförmig ausgebildete Schweissnähte auf, die am Beutel gegenüber dem Aufnahmebereichs angeordnet sind. Somit lässt sich eine zuverlässige und vollständige Durchmischung von Probe- und Verdünnungsflüssigkeit in den Beutel gewährleisten.

Die abgetrennte Verbindung der Aufnahmebereiche voneinander kann durch eine Unterbrechung, beispielsweise einen Schlitz, unterbrochen sein, der sich bevorzugt über mindestens 25% der Höhe des Beutels erstreckt. Eine derartige Unterbrechung ist bevorzugt im Bereich der Pipettenspitzenzugänge entlang einer Abtrennungslinie ausgebildet. Eine derartige Unterbrechung ermöglicht ein Ausbauchen des Mischbereichs und erleichtert damit das Befüllen des Mischbereichs mit Probe und/oder Verdünnungsflüssigkeit.

Eine Höhe des Beutels beträgt mindestens 50 mm und maximal 150 mm, bevorzugt mindestens 70 mm und maximal 130 mm, insbesondere bevorzugt maximal 110 mm und minimal 80 mm. Eine Breite des Aufnahmebereichs beträgt maximal 70 mm, bevorzugt maximal 52 mm und insbesondere bevorzugt maximal 45 mm. Das Volumen des Beutels kann von 1 ml bis 15 ml, bevorzugt 10 ml, betragen.

Für den Fall, dass der Aufnahmebereich abgeschrägte Ränder aufweist, umfasst die Breite des Aufnahmebereichs jeweils die Breite in einem nicht abgeschrägten Bereich. Ein Beutel mit einer derartigen Grösse ist optimal geeignet um eine mikrobiologische Verdünnungsreihe durchzuführen.

Die Aufnahmebereiche können nebeneinander angeordnet sein. Nebeneinander im Sinne der Anmeldung bedeutet in einer Reihe nebeneinander. Somit weist ein Beutel zumindest eine ersten Aufnahmebereich und einen letzten Aufnahmebereich auf, die an genau einen Aufnahmebereich grenzen. Alle weiteren Aufnahmebereiche zwischen dem ersten und dem letzten Aufnahmebereich grenzen an jeweils zwei benachbarte Aufnahmebereiche. Die Aufnahmebereich können entlang Ihrer gesamten Länge aneinander angrenzen oder nur entlang eines Teilbereichs. Es sind somit Aufnahmebereiche sowie Mischbereiche jeweils nebeneinander angeordnet.

Ein derartiger Beutel lässt sich als Endlosband produzieren, und in eine dafür vorgesehene Aufnahmevorrichtung einsetzen. Des Weiteren lässt sich ein derartiger Beutel nach der Benutzung leicht entsorgen.

Es wäre weiterhin möglich einen Beutel mit sternförmig nebeneinander angeordneten Mischbereichen auszubilden. Bei einer sternförmigen Ausbildung weisen alle Aufnahmebereiche eines Beutels eine gemeinsame Kontaktstelle auf an einem Mittelpunkt auf. Die Aufnahmebereiche sind radial wegweisend von diesem Mittelpunkt angeordnet.

Der Beutel kann aus Polyethylen bestehen. Bevorzugt besteht der Beutel aus high density Polyethylen (PE-HD) oder eine Mischung aus HD-PE (high-density PE) und LD-PE (low density PE). Weiterhin wären beispielsweise PP (Polypropylen), PVC (Poylvinylchlorid), PS (Polystyrol) sowie Klarsichtfolien oder bio-basierte Kunststofffolien aus Polylactid (PLA) oder thermoplastische Stärke (TPS) als Material möglich. Ein derartiger Beutel lässt sich kostengünstig und leicht herstellen sowie leicht entsorgen. Des Weiteren entstehen keine Reaktionen mit der Probe oder dem Verdünnungsmittel. Der Beutel kann aus einem transparenten Material bestehen.

Somit lässt sich die Füllung sowie Vermischung innerhalb des Beutels auch optisch kontrollieren. Die Wanddicke des Beutels liegt im Bereich von 15 µm bis 35 pm.

Somit erhält man ein optimales Verhältnis von Materialverbrauch und Festigkeit des Beutels.

Ein Material des Beutels kann eine Dichte von 0.8 bis 1.2 g/cm³, bevorzugt 0.9 g/cm³, aufweisen. Ein derartiger Beutel lässt sich gut aufbewahren und leicht in eine Aufnahmevorrichtung einbringen.

Der Beutel kann aufrollbar und/oder umfaltbar ausgebildet sein und in eine Verpackung einlegbar sein. Somit lässt sich der Beutel gut verstauen, leicht sterilisieren, und steril zu seinem Zielort transportieren.

Der Beutel kann steril ausgebildet sein. Somit lassen sich korrekte Verdünnungsreihen erzielen.

Der Beutel wie vorhergehend beschrieben kann zur Durchführung von Verdünnungsreihen oder in weiteren Laboranwendungen verwendet werden.

Zur Lösung der vorher genannten Aufgabe führt weiterhin eine Aufnahmevorrichtung zur Aufnahme von Beuteln zur Durchführung von Verdünnungsreihen, insbesondere zur Aufnahme von Beuteln wie vorhergehend beschrieben. Die Aufnahmevorrichtung umfasst einen Einlegebereich für einen Beutel mit mindestens einem Aufnahmebereich, wobei der Einlegebereich für jeden Aufnahmebereich eines Beutels einen Aufnahmeabschnitt aufweist. Des Weiteren ist min-, destens eine Haltevorrichtung für eine Seite oder Lasche eines Beutels ausgebildet.

Eine derartige Aufnahmevorrichtung ermöglicht ein stabiles Aufnehmen eines Beutels und somit eine sichere und einfache Durchführung einer Verdünnungsreihe. Dies insbesondere da ein Beutel selbst nicht standfähig ist und daher ohne Halterung oder Befestigung nicht eigenständig sicher befüllbar ist. Die Aufnahmevorrichtung ist bevorzugt so ausgebildet, dass ein Beutel in einem eingelegten Zustand den Boden der Aufnahmevorrichtung berührt, so dass das Gewicht des Beutels mit Inhalt nicht ausschliesslich durch die Haltevorrichtung gehalten werden muss. Des Weiteren ist es zusätzlich oder alternativ möglich, den Beutel in der Aufnahmevorrichtung einzuklemmen, so dass der Beutel in der Aufnahmevorrichtung fixiert ist.

Die Haltevorrichtung kann bewegbar ausgebildet sein, sodass die Position einer Kontaktfläche zwischen Haltevorrichtung und Beutel in der Höhe bezüglich des Einlegebereichs und bevorzugt in einem Abstand zwischen den Kontaktflächen verstellbar ausgebildet ist. Somit kann eine auftretende Spannung auf die Laschen des Beutels durch die Verringerung des Abstandes zwischen den Kontaktflächen verringert werden und die Haltbarkeit und Zuverlässigkeit des Beutels wird erhöht.

Eine derartige Haltevorrichtung erleichtert das Halten eines Beutels innerhalb der Aufnahmevorrichtung und sichert den Beutel während der Befüllung. Eine Bewegbarkeit der Kontaktflächen der Haltevorrichtung zwischen Haltevorrichtung und Beutel vermindert die Bildung von Spannungen auf dem Beutel und ermöglicht so ein zuverlässigeres Arbeiten.

Die Haltevorrichtung kann ein Adhäsionsmittel, bevorzugt an den Kontaktflächen, umfassen, welches mit einem Beutel, bevorzugt mit einer Lasche eines Beutels, einer Adhäsion erzielbar macht.

Mit einer derartigen Haltevorrichtung lässt sich ein Beutel leicht und sicher öffnen und halten ohne das Risiko einzugehen, den Beutel durch Einklemmen beispielsweise zu zerstören.

Das Adhäsionsmittel umfasst bevorzugt ein dauerhaft haft- oder klebefähiges Material, welches abwaschbar ist, insbesondere bevorzugt niedrigvernetzes PUR (Polyurethan), wie beispielsweise ein PUR-Gel oder ein PUR-Giessharz Bevorzugt wird ein Material verwendet, welches aufgrund seiner Oberflächeneigenschaften eine Haftung auf mechanische Weise oder über Van-der-Waals-Kräfte erzielt. Dies kann z.B. ein Silikon mit mikroskopischen Elementen auf der Oberfläche sein, die eine Haftung über Van-der-Waals-Kräfte erlauben. Beispielsweise kann Gecko-Nanoplast des Herstellers Gottlieb Binder GmbH, D-71084 Holzgerlingen verwendet werden.

Die Haltevorrichtung kann alternativ oder zusätzlich einen Klappenmechanismus umfassen, mit dem eine mechanische Greifkraft auf die Laschen eines Beutels erzielbar ist. Somit wird die Befestigung des Beutels in der Aufnahmevorrichtung optimiert.

Der Klappmechanismus umfasst Klappen, die eine Kontaktfläche aufweisen, mit der eine Adhäsion zu einem Beutel erzielbar ist. Die Klappen können aus einer Startposition aufeinander zu bewegt werden, so dass Laschen eines Beutels mit der Kontaktfläche in Kontakt gebracht werden. Beim Aufklappen der Klappen zurück in die Startposition wird so der Beutel geöffnet und das Innere des Beutels zugänglich gemacht.

Zum Herauslösen des Beutels können die Klappen bevorzugt gegen eine Federkraft von den Beutellaschen weg gedrückt werden. Die Laschen des Beutels bleiben so an einem fixen Pipettentisch hängen und werden von der Kontaktfläche gelöst. Anschliessend drückt die Federkraft die Klappen wieder in die Startposition.

Der Klappenmechanismus kann weiterhin Seitenteile umfassen, die zusätzlich zur Adhäsionskraft der Kontaktflächen eine Greifkraft auf die Laschen des Beutels erzielbar machen.

Die Seitenteile können um eine Schwenkachse gefedert gelagert sein, so dass diese bei einer Bewegung der Klappen aus der Startposition aufeinander zu entgegen der Federkraft von der Kontaktfläche weg bewegt werden. Die Schwenkachse entspricht hierbei nicht dem Mittelpunkt des Radius der gekrümmten Seitenfläche der Seitenteile. Die Schwenkachse ist somit exzentrisch zum Drehpunkt des Radius der Seitenteile angeordnet. Dadurch kann eine Lasche eines Beutels in Kontakt mit der Kontaktfläche kommen. Bei der darauffolgenden Öffnung der Klappen zurück in die Startposition, bewegen sich die Seitenteile durch die Federkraft der Feder zurück in ihre erste Position und greifen die Laschen eines Beutels.

Bevorzugt ist der Klappenmechanismus so ausgebildet, dass weiterhin das Herausnehmen des Beutels aus der Aufnahmevorrichtung erleichtert wird, indem die Haltevorrichtung eine Ausgabeposition einnehmen kann, in der die Adhäsion der Kontaktflächen mit der Lasche des Beutels sowie die mechanische Greifkraft gelöst werden.

Die Aufnahmevorrichtung kann ein Dosierkopf zum Hinzudosieren von Verdünnungsflüssigkeit umfassen, wobei der Dosierkopf mit einer Flüssigkeitsquelle verbindbar ist und in eine Öffnung, insbesondere eine Pipettenspitze, zum Ausgeben der Flüssigkeit einführbar ausgebildet ist. Der Dosierkopf weist bevorzugt einen Kontaminationsschutz auf und ist insbesondere bevorzugt entlang einer Achse der Aufnahmevorrichtung verschiebbar ausgebildet. Durch die Verschiebbarkeit kann jeder Einlegebereich durch den Dosierkopf bedient werden.

Die Öffnung zum Ausgeben von Flüssigkeit ist bevorzugt eine Pipettenspitze, sodass der Dosierkopf ausschliesslich mit Verdünnungsflüssigkeit und nicht mit Probe in Kontakt kommen kann. Somit erleichtert eine derartige Ausgestaltung die Reinigungsarbeit und Verschleppungen können verhindert werden.

Ein derartiger Dosierkopf ermöglicht die punktgenaue und massgenaue Zudosierung von Verdünnungsflüssigkeit, sodass eine korrekte Verdünnungsreihe hergestellt werden kann.

Ein Kontaminationsschutz verhindert die Kontamination des Dosierkopfes durch die äussere Luft oder andere äussere Einwirkungen und die Verschiebbarkeit erleichtert das punktgenaue Zudosieren der Verdünnungsflüssigkeit.

Der Einlegebereich kann mindestens eine Einführungsstelle für eine Pipettenspitze, bevorzugt eine verstellbare Einführungsstelle aufweisen. Bevorzugt ist mindestens eine verstellbare Einführungsstelle pro Aufnahmeabschnitt ausgebildet.

Eine Einführungseinrichtung ermöglicht das Einführen einer Pipettenspitze, sowie gleichzeitig eine Fixierung der Pipettenspitze, sodass ein Dosierkopf auf die Pipettenspitze aufgesetzt werden kann. Eine verstellbare Einführungsstelle ist auf unterschiedliche Pipettenspitzengrössen anpassbar. Durch mindestens eine verstellbare Einführungsvorrichtung pro Aufnahmeabschnitt kann jeder Aufnahmeabschnitt mit einer Pipettenspitze erreicht werden und der Dosierkopf kann in jedem Aufnahmeabschnitt an die Pipettenspitze angekoppelt werden.

Eine derartige Einführungsstelle erleichtert die Handhabung und ermöglicht somit ein korrektes sauberes Arbeiten.

Der Einlegebereich kann eine Entnahmeöffnung umfassen, die so ausgebildet ist, dass eine Pipettenspitze mit vorbestimmter Länge bis zum untersten Punkt des Einlegebereichs hinunter reicht.

Eine derartige Entnahmeöffnung ermöglicht die Entnahme von Verdünnungsflüssigkeit mit Probe ohne das Risiko einer Verschleppung von Probenmaterial, welches durch die Einführungsstelle zugegeben wurde.

Die Aufnahmevorrichtung, bevorzugt der Dosierkopf, kann des Weiteren ein Auslöseelement umfassen, welches bei Betätigung den Pipettiervorgang auslöst. Ein derartiges Auslöseelement kann mechanisch oder elektrisch ausgebildet sein. Bevorzugt besteht zur Auslösung eine elektrische Verbindung zu einem Dispenser.

Ein Auslöseelement an der Aufnahmevorrichtung erleichtert die Handhabung beim Pipettiervorgang.

Zur Lösung der oben angegebenen Aufgabe führt weiterhin ein Dispenser zum Abgeben von Verdünnungsflüssigkeit, der eine Aufnahme für eine Pipette zum Aufnehmen und Abmessen der Verdünnungsflüssigkeit umfasst. Weiterhin umfasst der Dispenser eine Aufnahme für eine Zuführungsleitung von der Verdünnungsflüssigkeit zur Pipette, eine Aufnahme für eine Abführung von Verdünnungsflüssigkeit von einer Pipette und eine Vakuumquelle zum Erzeugen eines Unterdrucks in der Pipette zum Ansaugen der Verdünnungsflüssigkeit.

Ein derartiger Dispenser ermöglicht die genaue Zudosierung von Verdünnungsflüssigkeit und ist leicht zu reinigen, weil sämtliche Teile, wie Schläuche und Pipette leicht austauschbar sind und nicht mit kontaminierter Flüssigkeit in Kontakt kommen.

Der Dispenser kann einen Füllstandsensor aufweisen, durch den das Flüssigkeitsvolumen an der Pipette bestimmbar ist.

Somit lässt sich das Hinzudosieren des Flüssigkeitsvolumens direkt an der Pipette abmessen, sodass eine genaue Bestimmung möglich sowie ein optische Überprüfung möglich ist.

Die Pipette kann austauschbar sein. Die Pipette kann in die Aufnahme für eine Pipette einlegbar sein und durch einen Klipp-oder Schnappmechanismus leicht entfernbar und wiedereinsetzbar sein.

Es kann somit eine handelsübliche Pipette, wie beispielsweise eine serologische Pipette aus Kunststoff oder Glas, in den Dispenser eingespannt werden, sodass Ersatzteile leicht verfügbar, sowie das Volumen der Pipette an die Bedürfnisse leicht angepasst werden kann.

Es kann eine Druckquelle zur Erzeugung eines Drucks zum Ausgeben der Verdünnungsflüssigkeit aus der Pipette ausgebildet sein, wobei die Druckquelle bevorzugt eine Druckpumpe in Kombination mit einem Druckreservoir ist.

Hierbei unterstützt das Druckreservoir das Ausgeben der Verdünnungsflüssigkeit zu Beginn des Ausgebens um eine schnelle Ausgabe der Verdünnungsflüssigkeit zu ermöglichen. Das Druckreservoir ist bevorzugt während des Einsaugens der Verdünnungsflüssigkeit in die Pipette mit Druckluft ladbar und der Druck aus dem Druckreservoir ist während des Ausgebens der Verdünnungsflüssigkeit zur Unterstützung des Ausgebens entladbar. Die letzten Volumenanteile der Verdünnungsflüssigkeit werden im Wesentlichen ausschliesslich über Druck aus der Druckquelle ausgegeben, bevorzugt über Druck aus dem Druckreservoir mit leichter Unterstützung von der Druckpumpe, sodass die Verdünnungsflüssigkeit nicht mit übermässigem Druck aus der Pipette herausspritzt.

Eine derartige Ausbildung ermöglicht ein schnelles Ausgeben der Verdünnungsflüssigkeit, welches dennoch kontrolliert geschieht.

Der Füllstandsensor kann ein optischer Füllstandsensor sein.

Ein optischer Füllstandsensor ist genau und dennoch kostengünstig.

Alternativ wäre weiterhin ein kapazitiver oder UltraschallSensor denkbar.

Der Dispenser kann Sterilfilter, insbesondere an einer Kontaktstelle eines Reservoirs von Verdünnungsflüssigkeit zur Aussenluft und an einer Kontaktstelle der Pipette zu kontaminierter Luft aufweisen, um eine Verunreinigung der Verdünnungsflüssigkeit durch verunreinigte Luft zu verhindern.

Ein Sterilfilter ist somit bevorzugt an allen Kontaktpunkten der Verdünnungsflüssigkeit mit Luft angebracht.

Ein derartig ausgestalteter Dispenser ermöglicht ein sauberes, keimfreies und korrektes Arbeiten.

Die Pipette kann eine Skala aufweisen, auf der die Genauigkeit des Füllstandsensors überprüfbar ist.

Eine derartige Skala ermöglicht eine einfache optische Überprüfung der Genauigkeit und ermöglicht weiterhin eine Anpassung des Füllstandes auf dem gewünschten Wert falls notwendig.

In den Dispenser können Schläuche einlegbar sein. Die Schläuche sind bevorzugt zwischen einem Reservoir von Verdünnungsflüssigkeit und der Pipette sowie zwischen Pipette und Verdünnungsreihenanordnung oder Dosierkopf einer Aufnahmevorrichtung angeordnet. Die Schläuche können in Quetschventile einlegbar sein, die einerseits die Halterung der Schläuche bilden und andererseits eine Ventilfunktion haben.

Die Schläuche führen Verdünnungsflüssigkeit in die Pipette sowie aus der Pipette hinaus zu einer Verdünnungsreihe. Die Verwendung von Schläuchen macht diese Verbindungen leicht austauschbar und leicht reinigbar.

Der Dispenser kann Quetschventile umfassen, mit denen die Zufuhr und das Abgeben von Verdünnungsflüssigkeit steuerbar sind.

Die Quetschventile ermöglichen beziehungsweise verhindern das Durchlaufen von Flüssigkeit durch eine Leitung.

Die Quetschventile sind einfach zu handhaben, günstig zu beschaffen und leicht zu unterhalten. Des Weiteren ermöglichen Quetschventile ein vereinfachtes Ausbauen und Auswechseln der Leitungen insbesondere Schläuche.

Der Dispenser kann eine Höhenverstellung für die Pipettenaufnahme umfassen, die eine Anpassung einer Pipettenhalterung an die Höhe der eingelegten Pipette erzielbar macht.

Eine Höhenverstellung des Dispensers ermöglicht das Einlegen verschiedener Grössen von Pipetten und somit das Anpassen des Dispensers an verschiedene Volumina.

Der Dispenser kann in einem Load-Modus betreibbar sein, in welchem Schläuche und Pipette entnehmbar und einsetzbar sind. In einem derartigen Load-Modus sind sämtliche Ventile offen, sodass die Schläuche entnommen werden können. Des Weiteren liegt bevorzugt in einem Load-Modus kein Vakuum an. Ein derartiger Modus ermöglicht ein schnelles Reinigen des Dispensers sowie ein schnelles Austauschen beschädigter Teile falls notwendig.

Der Dispenser kann weiterhin in einem Korrekturmodus betreibbar sein, in welchem der Füllstand von Verdünnungsflüssigkeit in der Pipette einstellbar ist.

In diesem Korrekturmodus wird das Ventil, welches die Zufuhr von Verdünnungsflüssigkeit einstellt, geöffnet, sodass Verdünnungsflüssigkeit aus der Pipette zurück in das Flüssigkeitsreservoir fliessen kann. Daraufhin kann der Füllstandsensor angepasst werden, sodass bei der nächsten Füllung der Pipette mit Verdünnungsflüssigkeit der korrekte Volumenstand erreicht werden kann.

Der Dispenser kann elektronisch mit einer Aufnahmevorrichtung verbindbar sein.

Durch eine elektronische Verbindung zwischen Dispenser und Aufnahmevorrichtung kann der Dispenser von Auslöseelementen an einer Aufnahmevorrichtung betätigt werden. Somit ist die Handhabung einfacher.

Der Dispenser kann weiterhin einen Drucksensor umfassen, mit dem ein Druckabfall während der Ausgabe der Verdünnungsflüssigkeit detektierbar ist.

Somit ist sichergestellt, dass sämtliche Verdünnungsflüssigkeit abgegeben worden ist und bevorzugt ausserdem Luft zur Vermischung von Probe und Verdünnungsflüssigkeit abgegeben werden kann.

Zur Lösung der oben angegebenen Aufgabe führt weiterhin ein Verfahren zur Durchführen von Verdünnungsreihen umfassend die folgenden Schritte:
- Einsaugen einer vorbestimmten Menge Verdünnungsflüssigkeit aus einem Reservoir in eine Pipette durch Erzeugung eines Unterdrucks in der Pipette mittels einer Vakuumpumpe;
- Beenden des Einsaugens, insbesondere durch ein Signal eines Füllstandsensors an der Pipette;
- Schliessen eines Ventils zwischen Reservoir und Pipette;
- Einfüllen und bevorzugt gleichzeitiges Mischen mit Probenmaterial der vorbestimmten Menge eingesaugter Verdünnungsflüssigkeit aus der Pipette in einen Beutel zur Herstellung von Verdünnungsreihen.

Ein derartiges Verfahren ermöglicht ein schnelles und genaues Hinzudosieren von Verdünnungsflüssigkeit zu einer Probe. Des Weiteren findet kein Kontakt zwischen Probe und Pipette oder Schläuchen statt, sodass im Normalfall keine Reinigung des Dispensers notwendig ist.

Das Einfüllen der Verdünnungsflüssigkeit in den Beutel kann durch eine Druckquelle unterstützt werden.

Mit Unterstützung durch eine Druckquelle kann die Verdünnungsflüssigkeit schneller in den Beutel eingebracht werden. Während des Einsaugens der Verdünnungsflüssigkeit kann ein Druckreservoir aufgefüllt werden und beim Einfüllen der Verdünnungsflüssigkeit in den Beutel zusätzlich zum Druck einer Druckpumpe zur Erhöhung der Fliessgeschwindigkeit der Verdünnungsflüssigkeit verwendet werden.

Durch die Auffüllung des Druckreservoirs in Abhängigkeit des eingesaugten Volumens, bevorzugt mit der Luft aus der Pipette während des Einsaugens, kann nicht mehr Druck im Druckreservoir vorhanden sein als für das Abgeben der Verdünnungsflüssigkeit notwendig ist. Somit kann auch nicht mehr Druck ausgegeben werden. Das Druckreservoir trägt somit zur Erhöhung der Fliessgeschwindigkeit der Verdünnungsflüssigkeit beim Einfüllen der Verdünnungsflüssigkeit in einen Beutel bei, der absolute Druck für das Einfüllen verringert sich jedoch gegen Ende des einzufüllenden Volumens, sodass die Luftblasen, die nach dem Einfüllen der Flüssigkeitsmenge in den Beutel zur Vermischung noch zugegeben werden, nicht unter dem höchsten Druck eingegeben werden.

Die Verwendung eines derartigen Druckreservoirs ermöglicht ein einfaches Anpassen der Druckerhöhung an das verwendete Volumen, ohne dass der Dispenser umgebaut oder umprogrammiert werden muss. Des Weiteren ermöglicht das Druckreservoir ein schnelles Einfüllen der Verdünnungsflüssigkeit ohne das Risiko das Verdünnungsflüssigkeit und/oder Probe aus dem Beutel herausspritzen. Nach dem Einfüllen der Verdünnungsflüssigkeit kann Luft durch die Pipette in den Beutel gedrückt werden.

Das Eindrücken von Luft führt zu einer besseren Vermischung von Verdünnungsflüssigkeit und Probe durch schlagartige Umkehr des Drehsinns des entstehenden Wirbels.

Das Einfüllen der Verdünnungsflüssigkeit in einen Beutel kann über einen Dispenserkopf einer Aufnahmevorrichtung durch eine Pipettenspitze durchgeführt werden.

Die Verwendung eines Dispenserkopfes einer Aufnahmevorrichtung und einer Pipettenspitze ermöglicht ein korrektes Hinzudosieren ohne Kontakt des Dispensers oder des Dispenserkopfes mit der Probe. Zudem wird die Probe vollständig aus der Pipettenspitze gespült. Die Pipettenspitze kann nach Kontakt mit Probenmedium bevorzugt nach Abschluss der Verdünnungsreihe zusammen mit den Beuteln entsorgt werden.

Die oben genannte Aufgabe wird weiterhin durch ein System umfassend mindestens eines der folgenden Elemente gelöst:
- Einen Beutel wie vorhergehend beschrieben;
- Eine Aufnahmevorrichtung wie vorhergehend beschrieben;
- Einen Dispenser wie vorhergehend beschrieben.

Die Erfindung wird nachfolgend in Ausführungsbeispielen anhand von Figuren näher erläutert. Hierbei zeigt:
- Figur 1: eine schematische Ansicht eines Beutels;
- Figur 2: eine schematische Ansicht eines Beutels in einer seitlichen Ansicht;
- Figur 3: eine schematische Darstellung eines Dispensers;
- Figur 4: eine schematische Seitenansicht des Dispensers aus Figur 3;
- Figur 5: eine perspektivische Ansicht einer Aufnahmevorrichtung;
- Figur 6: eine perspektivische Ansicht der Aufnahmevorrichtung aus Figur 5 in einer Beladeposition;
- Figur 7: einen Schnitt durch eine Aufnahmevorrichtung;
- Figur 8a: einen Schnitt durch eine Aufnahmevorrichtung in einer Startposition;
- Figur 8b: einen Schnitt durch eine Aufnahmevorrichtung in einer ersten Klappposition;
- Figur 8c: einen Schnitt durch eine Aufnahmevorrichtung in einer zweiten Klappposition;
- Figur 8d: einen Schnitt durch eine Aufnahmevorrichtung in einer Adhäsionsposition;
- Figur 8e: einen Schnitt durch eine Aufnahmevorrichtung in einer Greifposition;
- Figur 8f: einen Schnitt durch eine Aufnahmevorrichtung in einer Befüllungsposition;
- Figur 8g: einen Schnitt durch eine Aufnahmevorrichtung in einer Ausgabeposition;
- Figur 9: eine perspektivische Ansicht einer alternativen Ausführungsform der Aufnahmevorrichtung;
- Figur 10: einen Querschnitt durch einen Klappenmechanismus.

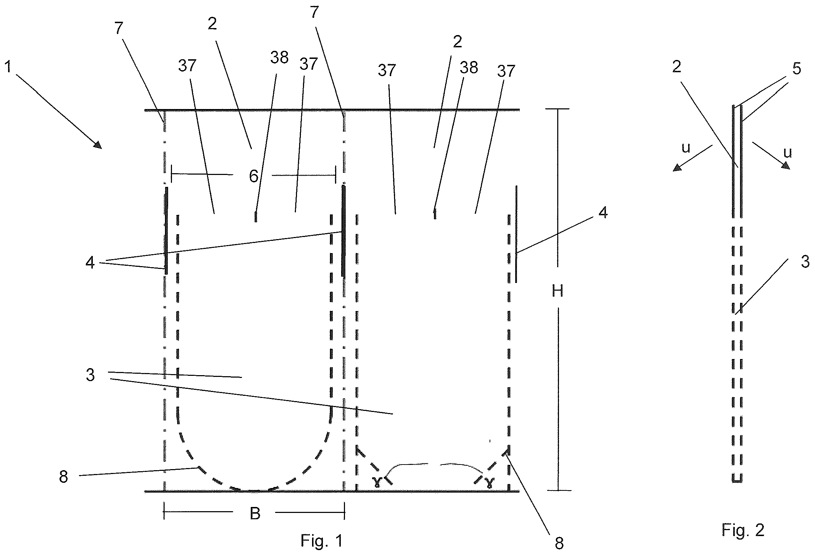

Figur 1 zeigt eine schematische Ansicht eines Beutels 1. Der hier gezeigte Beutel 1 weist exemplarisch zwei nebeneinander liegende Abschnitte auf. Der Beutel 1 umfasst zwei Aufnahmebereiche 2 sowie zwei Mischbereiche 3, d.h. je ein solcher Bereich pro Abschnitt. An jeweils drei Seiten ist der jeweilige Mischbereich 3 flüssigkeitsdicht durch Schweissnähte und/oder Falzungen verschlossen. Die jeweiligen Mischbereiche 3 sind durch Perforationen 7 voneinander abtrennbar ausgebildet. Die Verbindung mit der Perforation 7 ist durch einen Schlitz 4 unterbrochen. Ein derartiger Schlitz 4 ermöglicht ein erleichtertes Ausbauchen des Beutels beim Einfüllen von Probe und/oder Verdünnungsflüssigkeit. Im Bereich des Übergangs von Aufnahmebereich 2 in den Mischbereich 3 ist eine punktförmige Verbindung in Form eine Punktschweissung 38 angeordnet, durch die der Zugang in den Mischbereich 3 in zwei Pipettenspitzenzugänge 37 aufgeteilt wird. Dies ermöglicht einen Zugang zum Mischbereich 3 mit einer Pipettenspitze nur in einem begrenzten Bereich und getrennt von der nächsten Pipettenspitze. Somit werden Verschleppungen und Kontaminationen verhindert. Ein Abschnitt des Beutels 1 weist eine Breite B von 60 mm auf. Die Breite B wird von Perforation 7 zur nächsten Perforation 7 gemessen. Die Höhe H des Beutels 1, die den Mischbereich 3 sowie den Aufnahmebereich 2 umfasst, beträgt 110 mm. Der Anteil des Aufnahmebereichs 2 an dieser Höhe beträgt 30 mm, während der Anteil des Mischbereichs der Höhe H 80 mm beträgt. Die Breite 6 des Aufnahmebereichs 2 erstreckt sich von einer Verschweissung zur nächsten Verschweissung. Der Aufnahmebereich 2 bildet gleichzeitig zwei Laschen 5 (siehe Figur 2), die in Pfeilrichtung u umfaltbar ausgebildet sind. Die Laschen 5 erstrecken sich somit über die ganze Länge des Aufnahmebereichs 2. Im Aufnahmebereich 2 befindet sich keine flüssigkeitsdichte Verbindung mehr. Der Beutel 1 ist aus Folien ausgebildet. Die Folien sind transparent für sichtbares Licht und aus Polyethylen (PE). Die jeweiligen Mischbereiche 3 weisen weiterhin Schweissnähte auf, die so geformt sind, um tote Ecken zu vermeiden und gezielt die Wirbelbildung durch die Flüssigkeit und Luft zu ermöglichen. Der erste Mischbereich 3 ist hierbei beispielartig mit einer halbkreisförmigen Schweissnaht versehen. Der zweite Mischbereich 3 ist beispielhaft mit abgeschrägten Rändern 8 ausgestaltet. In der Regel sind die Mischbereiche in einem Endlosbeutel gleich ausgestaltet. Der Beutel 1 wird als Endlosbeutel produziert und kann vom Benutzer je nach Anzahl der benötigten Mischbereiche 3 an den Perforationen 7 abgetrennt werden.

Der Beutel 1 wird in einer Kartonverpackung gelagert und kann durch eine Entnahmeöffnung auch einzeln entnommen werden. Der Beutel 1 ist des Weiteren gammasterilisiert und in der Kartonverpackung weiterhin steril verpackt.

Figur 2 zeigt eine Seitenansicht des Beutels 1 aus Figur 1. Der Beutel 1 weist einen Aufnahmebereich 2 sowie einen Mischbereich 3 auf. Der Aufnahmebereich 2 wird durch zwei Laschen 5 gebildet. Die Laschen 5 sind umfaltbar in Pfeilrichtung u ausgestaltet.

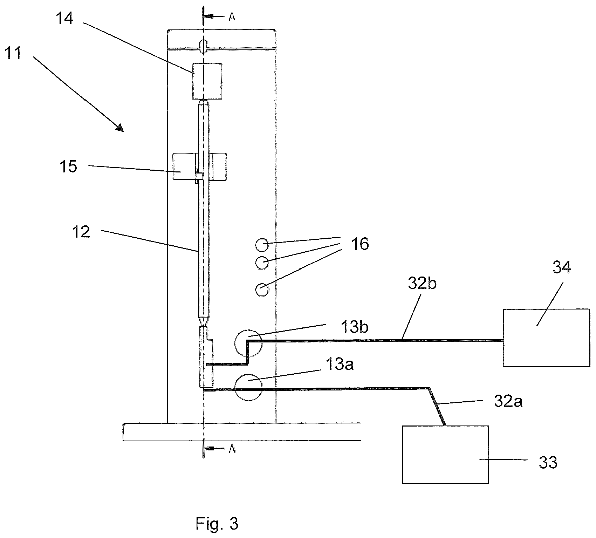

Figur 3 zeigt eine schematische Ansicht eines Dispensers 11. Der Dispenser 11 umfasst eine Pipette 12, die über Schläuche 32a,b, die mit Quetschventilen 13a,b steuerbar sind, verbunden ist. Auf der Pipette 12 ist eine Skala ausgebildet. Des Weiteren umfasst der Dispenser 11 einen Füllstandssensor 15 an der Pipette 12. Der Füllstandsensor 15 ermöglicht eine Volumenbestimmung der Flüssigkeit in der Pipette 12. Des Weiteren umfasst der Dispenser 11 eine Höhenverstellung 14, mit der der Dispenser 11 auf unterschiedliche Pipetten 12 angepasst werden kann. Der Füllstandsensor 15 ist ein optischer Füllstandsensor. Die Quetschventile 13 ermöglichen die Unterbrechung bzw. Öffnung eines Flusses von Flüssigkeit einerseits von einem Flüssigkeitsreservoir 33 zur Pipette 12 und andererseits von der Pipette 12 zu einem Dosierkopf oder direkt zu einer Pipettenspitze 34. Sowohl das Flüssigkeitsreservoir 33 als auch die Pipette sind mit Sterilfiltern ausgestattet, die zugehende Luft steril halten. Oberhalb der Höhenverstellung 14 ist die Pipette 12 an eine Vakuumpumpe anschliessbar. Die Vakuumpumpe erzeugt einen Unterdruck und ermöglicht bei geöffnetem Quetschventil 13a das Einsaugen einer Flüssigkeit aus dem Flüssigkeitsreservoir. Des Weiteren umfasst der Dispenser 11 optische Anzeigen 16 die Funktionsmodus und/oder Fehler anzeigen.

Zum Herstellen einer Verdünnungsreihe wird zunächst Verdünnungsflüssigkeit aus einem Flüssigkeitsreservoir 33 mittels einer Vakuumquelle in eine Pipette 12 bis zu einem vorbestimmten Füllstand eingesogen. Die ausreichende Füllung der Pipette 12 wird durch den Füllstandssensor 15 registriert und das Quetschventil 32a geschlossen, so dass keine weitere Flüssigkeit mehr in die Pipette 12 eingesogen wird. Während der Füllung der Pipette 12 wird ein Druckreservoir durch einen Kompressor in Abhängigkeit von der aus der Pipette 12 entweichenden Luft aufgefüllt. Zum Abgeben der Flüssigkeit wird daraufhin das Quetschventil 32b geöffnet und durch das Druckreservoir und eine Druckluftquelle die Flüssigkeit aus der Pipette 12 in einen Beutel 1 (siehe Fig. 1) zur Erstellung von Verdünnungsreihen eingefügt.

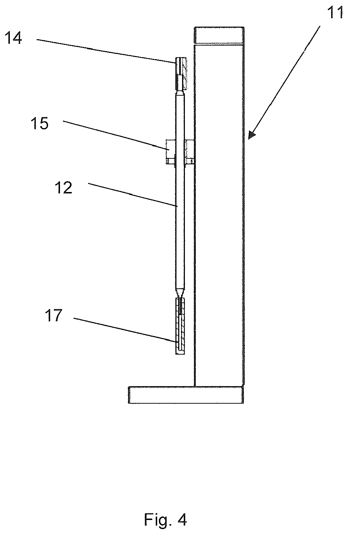

Figur 4 zeigt eine seitliche Darstellung der Figur 3. Der Dispenser 11 umfasst eine Pipette 12, auf der eine Skala aufgezeichnet ist. An der Pipette 12 ist ein Füllstandsensor 15 angebracht. Das obere Ende der Pipette 12 ist mit einer Höhenverstellung 14 versehen, sodass unterschiedliche Pipetten in den Dispenser 11 eingelegt werden können. Am unteren Ende der Pipette 12 ist ein Anschluss 17 angebracht, der beispielsweise ein T-förmiges Schlauchstück umfassen kann, an den Schläuche angebracht werden können.

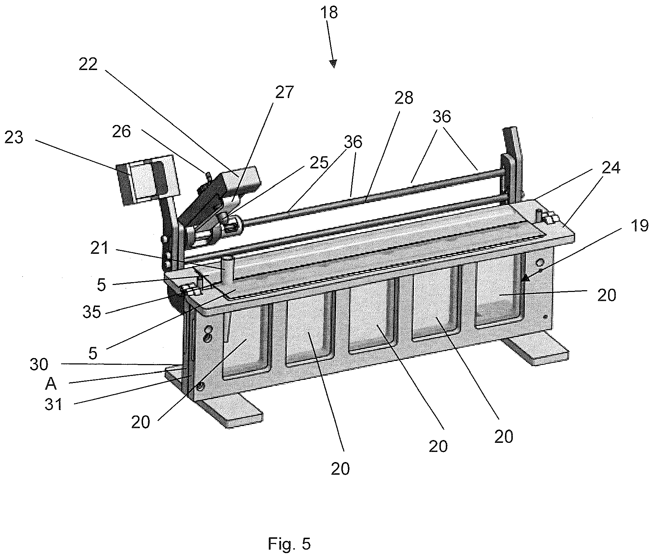

Figur 5 zeigt eine perspektivische Ansicht einer Aufnahmevorrichtung 18. Die Aufnahmevorrichtung 18 umfasst einen Einlegebereich 19, in den ein Beutel 1 (siehe Figur 1) eingelegt ist. Der Einlegebereich 19 umfasst fünf Aufnahmeabschnitte 20. Die Aufnahmeabschnitte 20 sind so ausgestaltet, dass der Beutel 1 (siehe Figur 1) in der Aufnahmevorrichtung 18 sichtbar ist. Um die Sichtbarkeit zu ermöglichen umfassen die Einlegebereiche jeweils einen Rahmen und/oder eine transparente Glasscheibe, in dessen Ausnehmung der eingesetzte Beutel sichtbar ist. Die Aufnahmevorrichtung 18 umfasst des Weiteren Haltevorrichtungen 24 für die Laschen 5 eines Beutels 1 (siehe Figur 1). Die Haltevorrichtungen sind klappbar sowie mit einem Adhäsionsmittel versehen, sodass die Laschen 5 an der Haltevorrichtung 24 kleben. Die Pipettenspitze 21 ermöglicht somit die Zugabe von Verdünnungsflüssigkeit oder Probe in einen Mischbereich 3 eines Beutels 1 (siehe Figur 1). Der Einlegebereich 19 umfasst eine erste Seitenwand des Einlegebereichs 30 sowie eine zweite Seitenwand des Einlegebereichs 31, zwischen welchen ein Abstand A ausgebildet ist. Der Abstand A ist einstellbar ausgebildet ist. Jeder Aufnahmeabschnitt 20 umfasst des Weiteren eine Pipettenspitzenaufnahme 35, die so ausgebildet ist, dass die Pipettenspitze 21 bis zu einem Anschlag oder einer form- oder kraftschlüssigen Aufnahme in den Aufnahmeabschnitt eingeführt werden kann. Somit kann die Pipettenspitze 21 in der Aufnahmevorrichtung abgelegt werden, ohne dass diese in einen Beutel hereinfällt. Die Aufnahmevorrichtung 18 weist einen Dosierkopf 22 auf, der entlang einer Schiene verschiebbar ausgebildet ist. Des Weiteren kann ein Dosierkopf 22 an die Pipettenspitze 21 angeschlossen werden. Der Dosierkopf 22 weist hierfür einen Pipettenspitzenanschluss 25 sowie einen Zuführungsanschluss 26 für die Zuführung von Verdünnungsflüssigkeit auf. Um eine Pipettenspitze 21 von dem Dosierkopf 22 zu lösen, wird ein Lösemechanismus 27 betätigt. Der Lösemechanismus 27 ist Teil des Dosierkopfes 22. Der Lösemechanismus 27 ist an einer Seite rotatorisch gelagert und kann durch Betätigung eine Pipettenspitze 21 von dem Dosierkopf 22 entfernen. Für jeden Aufnahmeabschnitt 20 wird eine Pipettenspitze 21 mit einer höhergradigen Verdünnung sowie ein zweite Pipettenspitze 21 mit der niedrigeren Verdünnung verwendet. Bei Nichtgebrauch kann der Dosierkopf 22 mit einem Kontaminationsschutz 23, der mit dem Dosierkopf verbunden ist, verdeckt werden, sodass keinerlei Kontaminationen auf den Pipettenspitzenanschluss 25 gelangen können. Des Weiteren ist der Dosierkopf 22 über die Längsverschiebungsschiene 28 verschiebbar ausgestaltet. Die Längsverschiebungsschiene 28 weist hierfür Rastpositionen auf, die den Dosierkopf 22 in einer korrekten Position für den jeweiligen Aufnahmeabschnitt 20 positioniert.

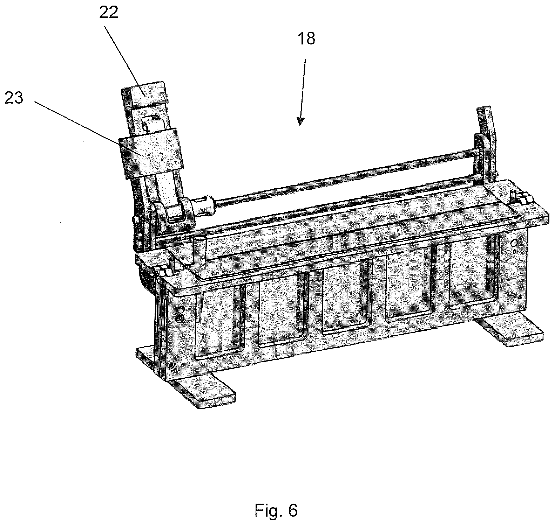

Figur 6 zeigt die Aufnahmevorrichtung 18 aus Figur 5, in der der Dosierkopf 22 mit der Kontaminationsschutzvorrichtung 23 verdeckt ist.

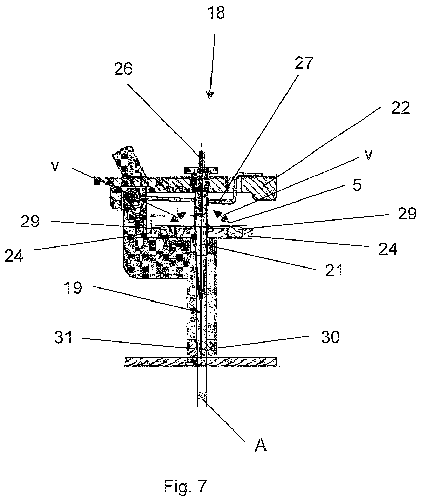

Figur 7 zeigt einen Schnitt durch eine Aufnahmevorrichtung 18. Die Aufnahmevorrichtung 18 weist eine erste Seite des Einlegebereichs 30 sowie eine zweite Seite des Einlegebereichs 31 auf. Die Seiten 30, 31 des Einlegebereichs 19 sind so verstellbar ausgebildet, dass der Abstand A verkleinert oder vergrössert werden kann, so dass unterschiedliche Pipettenspitzen 21 einführbar sind. Die Aufnahmevorrichtung umfasst des Weiteren zwei Haltevorrichtungen 24, wobei die Haltevorrichtungen 24 jeweils eine Kontaktfläche 29 aufweisen. Die Kontaktfläche 29 umfasst Polyurethan, sodass eine Lasche 5 eines Beutels 1 (siehe Figur 1) durch Adhäsion an der Kontaktfläche 29 befestigbar ist. Die Kontaktfläche 29 ist in einer Richtung v verschwenkbar. Des Weiteren sind die Haltevorrichtungen 24 in einem Abstand zwischen einander verstellbar bevorzugt federnd gelagert, sodass ein eventuell auftretender Zug auf ein darauf klebenden Beutel verringert werden kann. Ein derartig geöffneter Beutel 1 (siehe Figur 1) ist mit einer Pipettenspitze 21 leicht zugänglich. In dieser Darstellung ist der Dosierkopf 22 mit der Pipettenspitze 21 verbunden. Um diese Verbindung zu lösen, kann der Lösemechanismus 27 betätigt werden. Der Dosierkopf 22 ist des Weiteren mit Zuführungsanschluss 26 an einen Dispenser anschliessbar.

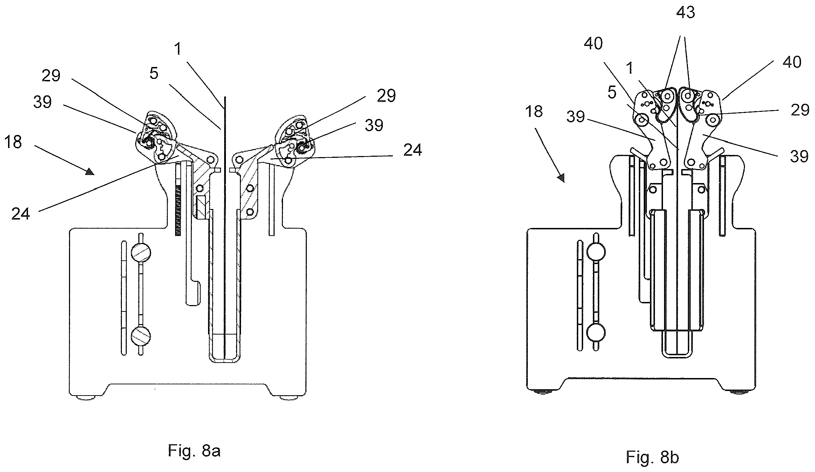

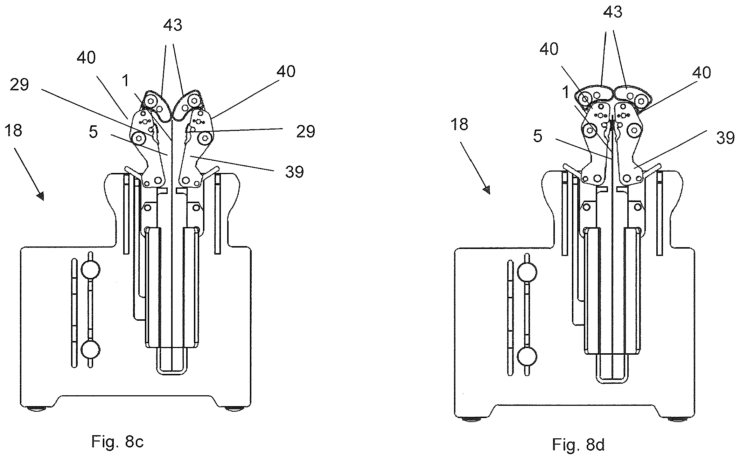

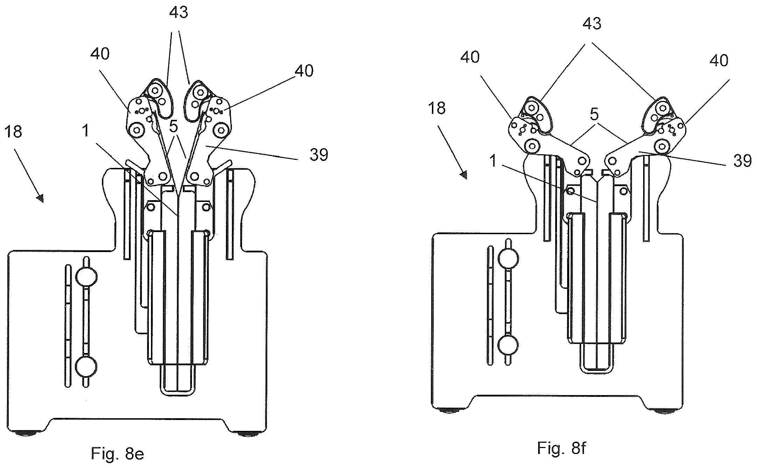

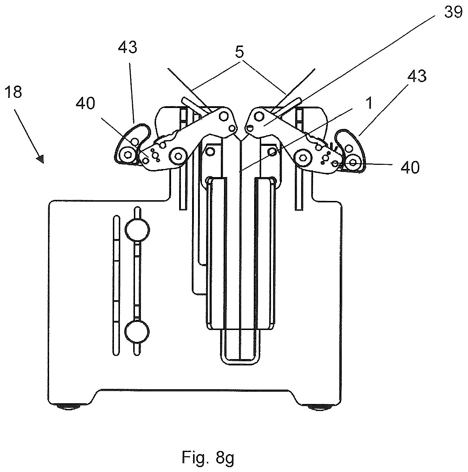

Die Figuren 8a bis 8g zeigen den Ablauf des Einlegens eines Beutels 1 in die Aufnahmevorrichtung 18. Die Haltevorrichtung 24 der Aufnahmevorrichtung 18 umfasst eine Kontaktfläche 29, die mit einem mikrostrukturierten Silikon beschichtet ist. Durch das mikrostrukturierte Silikon ist eine Adhäsion zwischen der Kontaktfäche 29 und dem Beutel 1 erzielbar. Des Weiteren umfasst die Haltevorrichtung 24 einen Klappenmechanismus 39. Der Klappenmechanismus 39 ist derart beweglich ausgestaltet, dass ein Beutel 1 in einer Befüllungsposition (Figur 8f) von dem Klappenmechanismus 39 gegriffen und zusätzlich zur Adhäsion gehalten wird. Der Ablauf des Einlegens, Festhaltens und Ausgebens des Beutels 1 ist im Folgenden dargelegt. Figur 8a zeigt die Aufnahmevorrichtung 18 in einer Startposition. Der Beutel 1 ist in die Aufnahmevorrichtung 18 eingelegt. Die Laschen 5 des Beutels 1 sind in keinem Kontakt mit der Kontaktfläche 29. Um den Beutel 1 in der Aufnahmevorrichtung 18 zu halten und die Laschen 5 zu öffnen, wird der Klappmechanismus 39 in eine erste Klappposition (Figur 8b) gebracht. In der ersten Klappposition befindet sich zwischen den von den Klappen 40 abgesetzten Seitenteile 43 des Klappmechanismus 39 ein Spalt. Die Laschen 5 des Beutels 1 sind zwischen den beiden Seitenteilen 43, welche zwischen den beiden Klappen 40 des Klappenmechanismus 39 angeordnet sind, angeordnet. Durch weiteres Zusammendrücken entgegen der Federkraft der Klappen 40 und der Federkraft des Seitenteile 43 des Klappmechanismus 39 bewegen sich die Seitenteile 43 des Klappmechanismus 39 in die zweite Klappposition (Figur 8c), ohne dass dabei der Beutel 1 an den Laschen 5 aus der Haltevorrichtung 18 herausgezogen wird, da der von den Seitenteilen 43 gebildete Spalt zwischen den beiden Klappen 40 des Klappenmechanismus 39 erhalten bleibt. Die Klappen 40 bewegen sich hierbei entlang einer Kreisbahn mit einem Zentrum im Klappmechanismus 39. Durch weitergehendes Zusammendrücken des Klappmechanismus 39 wird eine Adhäsionsposition (Figur 8d) erreicht. In der Adhäsionsposition sind die Klappen 40 des Klappenmechanismus 39 vollständig nach oben geschlossen, die Seitenteile 43 vollständig geöffnet und die Kontaktflächen 29 sind in Kontakt mit den Laschen 5. Durch die Beschichtung der Kontaktfläche 29 mit mikrostrukturiertem Silikon wird eine Adhäsion zwischen Kontaktfläche 29 und Lasche 5 des Beutels 1 erzielt. Nach der Erzielung der Adhäsion der Kontaktflächen 29 mit den Laschen 5 werden die Laschen 5 durch Entspannen der Federung der Klappen 40 auseinandergezogen und gleichzeitig bewegen sich die Seitenteile 43 wieder in Richtung der Startposition. Dadurch greifen die Seitenteile 43 die Laschen 5 auf jeder Seite und erzielen eine zusätzlichen Haltekraft auf den Beutel 1 in der Greifposition (Figur 8e). In der Befüllungspositon (Figur 8f) sind die Laschen 5 des Beutels 1 dann soweit geöffnet, dass eine Pipette in den Beutel einführbar ist. Die Laschen 5 sind in dieser Position durch Greifen der Seitenteile 43 und Adhäsion der Kontaktfläche 29 befestigt. Zum Herausnehmen des Beutels 1 aus der Aufnahmevorrichtung 18 werden die Klappen 40 in eine Ausgabeposition (Figur 8g) gebracht, in der die Adhäsion der Kontaktfläche 29 mit den Laschen 5 des Beutels 1 sowie die Greifkraft der Seitenteile 43 mechanisch aufgelöst wird. Der Beutel 1 kann somit leicht entnommen werden. Zum Lösen der Adhäsion wird die Kontaktfläche 29 durch Drehbewegung der Klappen 40 vom Pipettentisch 44 nach unten geschwenkt und so von der Lasche 5 abgelöst.

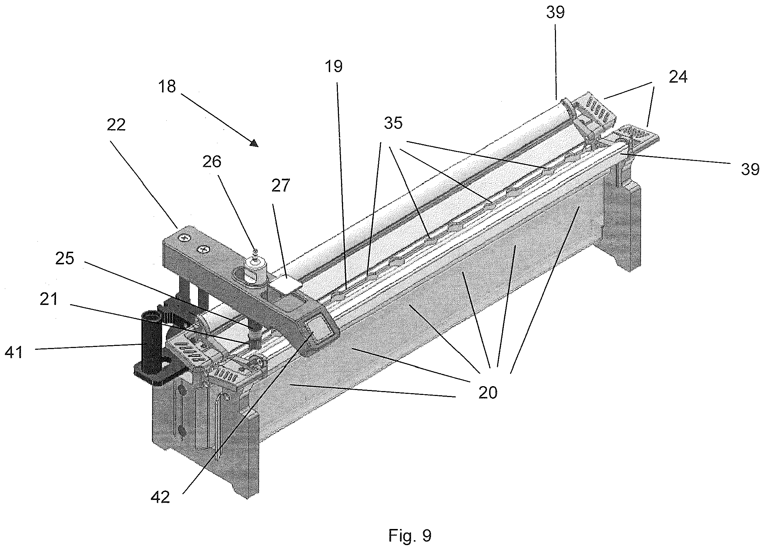

Figur 9 zeigt eine perspektivische Ansicht einer alternativen Ausführungsform der Aufnahmevorrichtung 18. Die Aufnahmevorrichtung 18 umfasst einen Einlegebereich 19, in den ein Beutel 1 (siehe Figur 1) einlegbar ist. Der Einlegebereich 19 umfasst sechs Aufnahmeabschnitte 20. Die Aufnahmeabschnitte 20 sind so ausgestaltet, dass der Beutel 1 (siehe Figur 1) in der Aufnahmevorrichtung 18 sichtbar ist. Um die Sichtbarkeit zu ermöglichen umfassen die Einlegebereiche jeweils eine transparente Plexiglasscheibe, durch die der eingesetzte Beutel sichtbar ist. Die Aufnahmevorrichtung 18 umfasst des Weiteren Haltevorrichtungen 24 für die Laschen 5 (siehe Figur 1) eines Beutels 1 (siehe Figur 1). Die Haltevorrichtungen 24 sind klappbar sowie mit mikrostrukturiertem Silikon versehen, sodass die Laschen 5 (siehe Figur 1) an der Haltevorrichtung 24 klebbar sind. Ausserdem umfasst die Haltervorrichtun 24 einen Klappmechanismus 39, der einen eingelegten Beutel zusätzlich zur Adhäsion fixiert. Die Funktion des Klappmechanismus ist in den Figuren 8a-g dargestellt. Die Pipettenspitze 21 ermöglicht somit die Zugabe von Verdünnungsflüssigkeit oder Probe in einen Mischbereich 3 eines Beutels 1 (siehe Figur 1). Jeder Aufnahmeabschnitt 20 umfasst des Weiteren eine Pipettenspitzenaufnahme 35, die so ausgebildet ist, dass die Pipettenspitze 21 bis zu einem Anschlag oder einer form- oder kraftschlüssigen Aufnahme in den Aufnahmeabschnitt eingeführt werden kann. Somit kann die Pipettenspitze 21 in der Aufnahmevorrichtung abgelegt werden, ohne dass diese in einen Beutel hereinfällt. Die Aufnahmevorrichtung 18 weist einen Dosierkopf 22 auf, der entlang der Aufnahmevorrichtung 18 verschiebbar ausgebildet ist. Des Weiteren kann der Dosierkopf 22 an die Pipettenspitze 21 angeschlossen werden. Der Dosierkopf 22 weist hierfür einen Pipettenspitzenanschluss 25 sowie einen Zuführungsanschluss 26 für die Zuführung von Verdünnungsflüssigkeit auf. Um eine Pipettenspitze 21 von dem Dosierkopf 22 zu lösen, wird ein Lösemechanismus 27 betätigt. Der Lösemechanismus 27 ist Teil des Dosierkopfes 22. Der Lösemechanismus 27 ist an einer Seite rotatorisch gelagert und kann durch Betätigung eine Pipettenspitze 21 von dem Dosierkopf 22 entfernen. Für jeden Aufnahmeabschnitt 20 wird eine Pipettenspitze 21 mit einer höhergradigen Verdünnung sowie ein zweite Pipettenspitze 21 mit der niedrigeren Verdünnung verwendet. Zur Ablage des Dosierkopfes bei Nichtgebrauch ist eine Dosierkopfablage 41 ausgebildet. Die Dosierkopfablage schützt gleichzeitig den Pipettespitzenanschluss 25 vor Kontaminationen. Der Dosierkopf 22 umfasst weiterhin einen Drucktaster 42, der mit einem Dispenser 11 (siehe Figur 3) elektronisch verbindbar ist. Der Drucktaster 42 löst den Zufluss von Verdünnungsflüssigkeit aus.

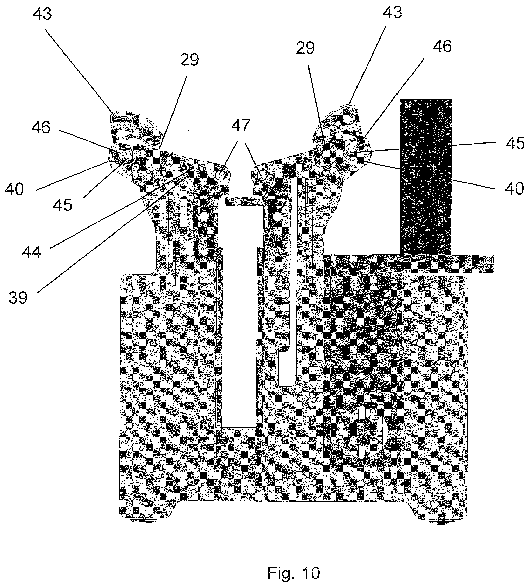

Figur 10 zeigt einen Querschnitt durch einen Klappenmechanismus 39. Die Seitenteile 43 der Klappen 40 sind um Schwenkachse 45 schwenkbar angeordnet und werden durch Feder 46 in ihrer Position gehalten. Das Seitenteil 43 liegt in der Startposition (Figur 8a) auf der Kontaktfläche 29 auf. Die Klappen 40 sind wieder um Klappenachse 47 schwenkbar angeordnet. Die Klappen 40 sind ebenfalls in einer neutralen Position dargestellt. Um die Laschen eines Beutels von der Kontaktfläche 29 zu lösen (siehe Figur 8g), können die Klappen 40 in Richtung von den Seitenteilen 43 weg nach unten gegen eine weitere Feder (nicht dargestellt) gedrückt werden, so dass der Beutel am Pipettentische 44 hängen bleibt. Des Weiteren können die Klappen 40 gegeneinander gedrückt werden, so dass die Seitenteile 43 entgegen der Federkraft der Feder 46 aufgeklappt werden. Hierbei ist die Schwenkachse 45 exzentrisch zum Drehpunkt der Seitenteile 43 angeordnet, so dass die Seitenteile aufklappen, sobald ein Druck der Seitenteile aufeinander aufgebracht wird.

## Patentansprüche

1. Beutel (1) zur Durchführung von Verdünnungsreihen, umfassend mindestens einen Aufnahmebereich (2) zum Hinzufügen von Probe und/oder Verdünnungsflüssigkeit und mindestens einen Mischbereich (3) zum Sammeln und Vermischen von Probe und Verdünnungsflüssigkeit, wobei der mindestens eine Mischbereich (3) an drei Seiten flüssigkeitsdicht verschlossen ist und der Aufnahmebereich (2) den Mischbereich (3) an einer Seite begrenzt, **dadurch gekennzeichnet, dass** der Aufnahmebereich (2) mindestens eine, bevorzugt zwei Laschen (5) aufweist, welche umfaltbar sind.

2. Beutel (1) nach Anspruch 1, **dadurch gekennzeichnet, dass** der Beutel (1) nicht selbsttragend ausgestaltet ist.

3. Beutel (1) nach einem der vorhergehenden Ansprüche, **dadurch gekennzeichnet, dass** der Beutel (1) zwei Folien umfasst.

4. Beutel (1) nach einem der vorhergehenden Ansprüche, **dadurch gekennzeichnet, dass** der Beutel (1) entlang der drei Seiten verbunden ist, insbesondere verschweisst ist.

5. Beutel (1) nach Anspruch 1, **dadurch gekennzeichnet, dass** die mindestens eine Lasche (5) entlang der ganzen Länge des Aufnahmebereichs (2) ausgebildet ist.

6. Beutel (1) nach einem der vorhergehenden Ansprüche, **dadurch gekennzeichnet, dass** der Aufnahmebereich zwei Pipettenspitzenzugänge umfasst, die durch eine Verbindung, bevorzugt eine Punktschweissung, voneinander getrennt ausgebildet sind

7. Beutel (1) nach einem der vorhergehenden Ansprüche, **dadurch gekennzeichnet, dass** eine Verbindung, bevorzugt eine Verschweissung, an den Seiten des Mischbereichs (3) die Seiten des Aufnahmebereichs (2) nicht umfasst.

8. Beutel (1) nach einem der vorhergehenden Ansprüche, **dadurch gekennzeichnet, dass** der Beutel (1) eine Mehrzahl, bevorzugt fünf, insbesondere bevorzugt sechs, Aufnahmebereiche (2) umfasst.

9. Beutel (1) nach einem der vorhergehenden Ansprüche, **dadurch gekennzeichnet, dass** ein erster Aufnahmenbereich (2), bevorzugt alle benachbarten Aufnahmebereiche (2), von einem zweiten bzw. benachbarten Aufnahmebereich (2) abtrennbar, bevorzugt durch eine Perforation abtrennbar, ausgebildet ist.

10. Beutel (1) nach einem der vorhergehenden Ansprüche, **dadurch gekennzeichnet, dass** eine Höhe des Beutels (1) mindestens 50 mm und maximal 150 mm, bevorzugt mindestens 70 mm und maximal 130 mm, insbesondere bevorzugt maximal 110 mm und minimal 80 mm umfasst, eine Breite des Aufnahmebereichs (2) maximal 70 mm, bevorzugt maximal 52 mm und insbesondere bevorzugt maximal 45 mm beträgt und/oder dass das Volumen 10 ml bis 15 ml beträgt.

11. Beutel (1) nach einem der vorhergehenden Ansprüche, dass die Aufnahmebereiche (2) nebeneinander angeordnet sind.

12. Beutel (1) nach einem der vorhergehenden Ansprüche, **dadurch gekennzeichnet, dass** die Wanddicke des Beutels (1) im Bereich von 15pm bis 30µm liegt.

## Claims

1. Bag (1) for carrying out dilution series, said bag including at least one receiving region (2) for adding a sample and/or a dilution liquid, and at least one mixing region (3) for collecting and mixing the sample and the dilution liquid, wherein the at least one mixing region (3) is sealed in a liquid-tight manner on three sides and the receiving region (2) delimits the mixing region (3) on one side,
**characterized in that** the receiving region (2) comprises at least one, in a preferred manner two tongues (5) which can be folded over.

2. Bag (1) according to Claim 1, **characterized in that** the bag (1) is developed so as to be non-self-supporting.

3. Bag (1) according to one of the preceding claims, **characterized in that** the bag (1) includes two foils.

4. Bag (1) according to one of the preceding claims, **characterized in that** the bag (1) is connected along the three sides, in particular is welded.

5. Bag (1) according to Claim 1, **characterized in that** the at least one tongue (5) is realized along the entire length of the receiving region (2).

6. Bag (1) according to one of the preceding claims, **characterized in that** the receiving region includes two pipette tip ports which are realized separately from one another as a result of a connection, in a preferred manner a spot weld.

7. Bag (1) according to one of the preceding claims, **characterized in that** a connection, in a preferred manner a welding, on the sides of the mixing region (3) does not include the sides of the receiving region (2).

8. Bag (1) according to one of the preceding claims, **characterized in that** the bag (1) includes a plurality, in a preferred manner five, in a particular preferred manner six, receiving regions (2) .

9. Bag (1) according to one of the preceding claims, **characterized in that** a first receiving region (2), in a preferred manner all adjacent receiving regions (2), is realized so as to be severable from a second or adjacent receiving region (2), in a preferred manner so as to be severable as a result of a perforation.

10. The bag (1) according to of the preceding claims, **characterized in that** a height of the bag (1) covers at least 50 mm and a maximum of 150 mm, in a preferred manner at least 70 mm and a maximum of 130 mm, in a particularly preferred manner a maximum of 110 mm and a minimum of 80 mm, a width of the receiving region (2) is a maximum of 70 mm, in a preferred manner a maximum of 52 mm and in a particularly preferred manner a maximum of 45 mm and/or **in that** the volume is between 10 ml and 15 ml.

11. Bag (1) according to one of the preceding claims, **characterized in that** the receiving regions (2) are arranged side by side.

12. Bag (1) according to one of the preceding claims, **characterized in that** the wall thickness of the bag (1) is within the range of between 15µ and 30pm.

## Revendications

1. Sac (1) destiné à la mise en oeuvre de dilutions en série, comprenant au moins une zone de réception (2) pour l'ajout de l'échantillon et/ou du liquide de dilution, et au moins une zone de mélange (3) destinée à la collecte et au mélange de l'échantillon et du liquide de dilution, la zone de mélange (3) au moins au nombre de un étant fermée de façon étanche au fluide sur trois côtés, et la zone de réception (2) limitant la zone de mélange (3) sur un côté, **caractérisé en ce que** la zone de réception (2) présente au moins une, de préférence deux attaches (5) qui peuvent être repliées.

2. Sac (1) selon la revendication 1, **caractérisé en ce que** le sac (1) est constitué de façon non autoportante.

3. Sac (1) selon l'une des revendications précédentes, **caractérisé en ce que** le sac (1) comprend deux feuilles.

4. Sac (1) selon l'une des revendications précédentes, **caractérisé en ce que** le sac (1) est raccordé le long des trois côtés, en particulier par soudure.

5. Sac (1) selon la revendication 1, **caractérisé en ce que** l'attache (5) au moins au nombre de un est constituée le long de la longueur totale de la zone de réception (2).

6. Sac (1) selon l'une des revendications précédentes, **caractérisé en ce que** la zone de réception comprend deux accès d'embout de pipette qui sont constitués séparément l'un de l'autre par un raccordement, de préférence une soudure par points.

7. Sac (1) selon l'une des revendications précédentes, **caractérisé en ce qu'**un raccordement, de préférence une soudure, sur les côtés de la zone de mélange (3) ne comprend pas les côtés de la zone de réception (2).

8. Sac (1) selon l'une des revendications précédentes, **caractérisé en ce que** le sac (1) comprend une pluralité de zones de réception (2), de préférence cinq, de façon particulièrement préférée six.

9. Sac (1) selon l'une des revendications précédentes, **caractérisé en ce qu'**une première zone de réception (2), de préférence toutes les zones de réception (2) voisines, est constituée de façon séparable d'une deuxième zone de réception (2) ou respectivement d'une zone de réception voisine, de préférence de façon séparable par une perforation.

10. Sac (1) selon l'une des revendications précédentes, **caractérisé en ce qu'**une hauteur du sac (1) est au moins égale à 50 mm et au maximum égale à 150 mm, de préférence au moins égale à 70 mm et au maximum égale à 130 mm, de façon particulièrement préférée au maximum égale à 110 mm et au minimum égale à 80 mm, une largeur de la zone de réception (2) est au maximum égale à 70 mm, de préférence au maximum égale à 52 mm, et de façon particulièrement préférée au maximum égale à 45 mm, et/ou **en ce que** le volume est compris entre 10 ml et 15 ml.

11. Sac (1) selon l'une des revendications précédentes, **caractérisé en ce que** les zones de réception (2) sont disposées de façon juxtaposée.

12. Sac (1) selon l'une des revendications précédentes, **caractérisé en ce que** l'épaisseur de paroi du sac (1) se situe dans la plage de 15 µm à 30 pm.
